# EUROPEAN PATENT APPLICATION

(11) **EP 2 602 773 A1**
(43) Date of publication of application: **12.06.2013**
(21) Application number: 12196072.8
(22) Date of filing: 07.12.2012
(51) Int. Cl.: G07F 17/32

(54) **Payment method and system**

(30) Priority: 07.12.2011 US 201161567991 P
(71) Applicant: Szrek2Solutions, LLC, East Greenwich, Rhode Island 02818 (US)
(72) Inventor: Szrek, Walter, East Greenwich, RI 02818 (US); Szrek, Irena, East Greenwich, RI 02818 (US)
(74) Representative: Hofstetter, Schurack & Partner

(57) **Abstract**

A payment system enables making purchases for a token fee. A customer is offered a choice of making a purchase at a regular price or taking a chance to make the purchase for an additional nominal fee. The nominal purchase or participation fee is determined based on the purchase price and a probability, which is calculated according to rules. The rules get established with a specific business and provide that the collected participation fees cover the cost of purchases. A random number generator system is programmed according to the rules of the method and system is used by the business. Based on the value of the random number, the system will determine if the customer was 'lucky' and needs to pay only the participation fee, nothing, or if the customer needs to pay the price of the goods plus the participation fee.

## Description

### CROSS REFERENCE TO RELATED APPLICATION

This application is related to and claims priority from earlier filed provisional patent application Serial No. 61/567,991, filed December 7, 2011, the entire contents thereof is incorporated herein by reference.

### BACKGROUND OF THE INVENTION

The present invention relates generally to the payment for purchases. More specifically, the present invention relates to a customer buying a chance to pay a nominal fee for purchases and a purchasing system, which determines that chance for the customer, using and/or generating random numbers.

People typically like to pay the least possible amount for purchases or get them for free. People also like to test their luck. It is likely that they would be willing to pay a token or small fee to try their luck, to see if they can get their purchases for a lower price or for free. People try their luck in almost anything in life: when they buy lottery tickets, when they bet on outcomes of events, also when they trade securities futures, etc. All these cases are related to buying specific products, where the actual outcome may depend on many causes, for example, on some random events such as drawing the balls in lottery game or very hard to predict outcomes of stock market performance, of elections, games, races, etc.

The present invention is enabling a person to try their luck while paying for purchases: in the supermarket, on Internet at Amazon, eBay, paying on PayPal or any other form of purchase or payment. By making a purchase using a method and system of the present invention, such as under the trademark Lucky Pay, a person gets a chance of getting their purchase for less money or for free.

Any type of money operations require auditing, so people or institutions are not abused. There are well established methods to audit flow of money, there are also established methods and products for auditing randomness. The examples of such products are Trusted Draw, Trusted Play and Trusted Play+ from Szrek2Solutions, LLC, as disclosed in U.S. Patent No. 6,934,846.

### SUMMARY OF THE INVENTION

The present invention preserves the advantages of prior art methods and systems for payments for goods. In addition, the improved method of the present invention provides new advantages not found in currently known methods and systems.

For an additional nominal fee at the time of purchase, the present method and system may be employed, such as under the trademark "Lucky Pay" or other, a customer may obtain a chance to pay less for their purchases. The present invention is a form of payment method where customers buy a chance to make purchases for a nominal fee and a broker paraty enables such transactions for that fee. The present invention may create a credit that will pay for higher priced goods, e.g., when a customer makes a purchase for $100, he or she can buy for $5 a 4% chance to make the purchase for just that $5 fee. If the customer is lucky, he or she only pays $5, if they are not lucky, they will need to pay $105 as opposed to $100.

Let's call a transaction the processing of a single request made in accordance with the present invention. A transaction is processed in the following way: request for participation system comes to a processor. The processor executes the rules of the present invention, which includes processing the purchase price and the probability to credit the goods or their fraction. The processor will then generate a random number or request a random number from an external random number generator. Depending on the random number value the processor determines if and what part of the purchase will be paid by the system of the present invention. For example, if the processor determines that the system will credit full value of the purchase with a probability of 4%; the processor will request random number from the range 1 through 100. If the generated random number is 1 through 4, the processor will assign full value of purchase to payment system; if any other number is generated, the payment system will not pay for the purchase. The processor may be in any configuration, location or handled by one or more parties.

The payment system may be structured in a variety of ways: it may credit full purchase price, fraction of the purchase price, the payment system entry or participation fee, or nothing. Maximum payment system credit value should not exceed the purchase value plus the entry fee. Maximum credit value could be limited.

There are different ways that the payment system of the present invention may be deployed. The fee should be fixed or variable - proportional to the purchase price. For example, 1) it could be a fixed fee of $5, regardless of purchase price; depending on the purchase price it would pay for the full purchase price or it's fraction with a different probability - the higher the purchase price the lower the probability for payment system to pay for the purchase; or 2) the fee could be variable and proportional to the purchase price. In this case the probability that payment system of the present invention would pay for the purchase price or its fraction would be in a similar proportion to entry fee. They payment system's coverage of the purchase price can be multi-tiered: it can pay one amount range with certain probability, a different amount range with another probability, and the like. In some embodiments, one of the coverage values of payment system would be its own fee, so the customers would not need to pay Lucky Pay fee. For example, the rule could be: in 25% of cases the payment system will cover the purchase price, the customer would not have to pay entry fee. In all cases, to avoid misuse, the payment system should be handled in a way that once customers chose to participate in the payment system of the present invention, they need to pay entry fee, even if they do not make a final purchase.

In some embodiments customer may be able to choose different options. These options may include different entry or participation fee, no entry or participation fee, min/max amount covered by the system, percent of purchase price covered by the system. The present invention could be also set up to pay for selected goods only.

A store or payment processor may offer promotions on participation in the present system such as discounts on the participation/entry fee, type of goods included in payment with the payment system, coupons for goods or some other incentives.

The present invention can be deployed in physical stores/locations and also on Internet: by an Internet store, auction house or payment processor.

In a preferred embodiment a random number is generated to determine if the payment system should pay for goods. For example, if payment system had to pay in 4% of events, a uniformly distributed random number from the range 1 to 100 is generated. Any time generated random number is 1, 2, 3 or 4 the payment system will pay for the goods. The random number could be generated 1) with or 2) without replacement (1) each time all possible random numbers from range or pool would be generated or 2) generated random number is taken out of the pool. In method 2) above, once the number of random numbers falls below certain limit, the pool of random numbers could be reseeded. This second approach eliminates a risk related to generation of random numbers. In some embodiments another solution such as a counter could be used to determine pay status. For example, if the payment system of the present invention had to pay in 4% of cases, a counter counting modulo 25 could be used. Any time value counter value was 1, the payment system would pay for the goods, in all other cases it would not pay. Other similar solutions could be entertained; all of the solutions should be regarded as a different way to use the payment system and method of the present invention.

It is therefore an object of the present invention to provide new and novel payment system and method that is interconnected with the purchase of goods.

A further object of the present invention is to provide a method and system where a user can pay a fee for participation in the payment system and method for a chance to have a portion of all of their purchase paid for by the payment system.

### BRIEF DESCRIPTION OF THE DRAWINGS

The novel features which are characteristic of the present invention are set forth in the appended claims. However, the invention's preferred embodiments, together with further objects and attendant advantages will be best understood by reference to the following detailed description taken in connection with the accompanying drawings in which:
Figs. 1A-1D shows an overview of four embodiments of the payment method and system of the present invention;
Fig. 2 shows the processing of payment in accordance with the present invention;
Fig. 3 illustrates the processing steps in accordance with the present invention; and
Fig. 4 illustrates the generation steps in accordance with the present invention.

### DETAILED DESCRIPTION OF THE PREFERRED EMBODIMENT

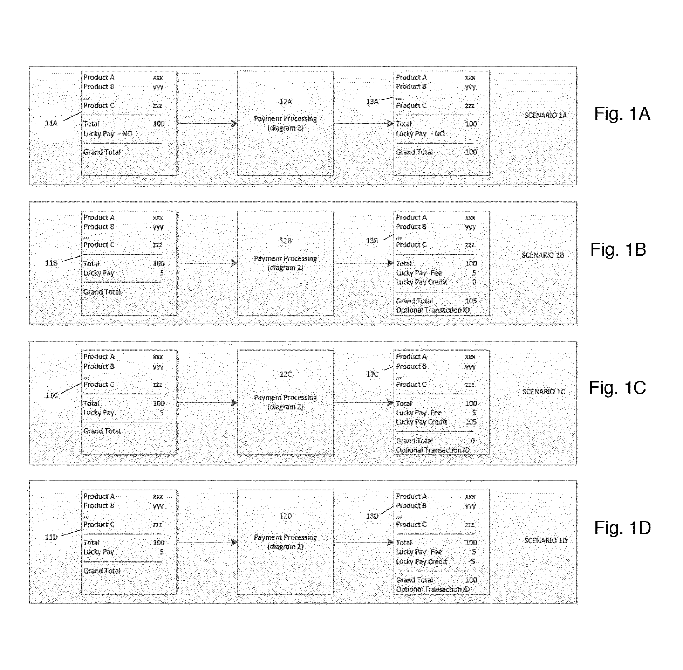

Referring first to Figs. 1A-D, four scenarios or embodiments are illustrated of the payment method and system of the present invention. In the embodiment of Fig. 1A, a customer makes purchase without participation in the method and system of the present invention. The customer is charged the usual full amount.

In the embodiments shown in Figs. 1B, 1C and 1D, the customer chooses to make purchase using the payment method and system of the present invention. Use of the present payment system with a certain probability may cover for the purchase price. It may cover different amounts. Depending how it is constructed it may offer payment for the goods or their fraction of their cost. Generally it should not pay for more than cost of goods and cost of the payment method and system of the present invention. It can be deployed in a variety of ways: it could pay fixed amount, full cost or a fraction of the cost of goods or goods and payment system participation fee or just for the participation fee. There might be different choices offered, for example, to pay more and have a bigger chance for of payment covered, or to pay more and to cover bigger part of the cost. The present method and system might be structured as a simple choice of payment where there is only one single chance of covering the payment, or where different amount could be covered with a different probability. It may also cost a different amount to cover cost within different ranges.

In the embodiments seen in Figs. 1B, 1C and 1D, there are three possible outcomes illustrated: customer may not be lucky and have to pay purchase price and the entry/participation as in Fig. 1B, or be lucky and have all his goods for free including participation/entry fee as in Fig. 1C, or be a little lucky and not to have to pay participation/entry fee but still pay for purchase, as in Fig. Fig. 1D. One more embodiment (not shown) could be that a customer gets the purchase price paid by the payment system (+$100) but has to pay participation/entry fee (-$5).

On customer receipts there is a transaction identifier (Transaction ID), which is optionally provided. In a preferred embodiment this identifier is used to verify transaction using the present invention.

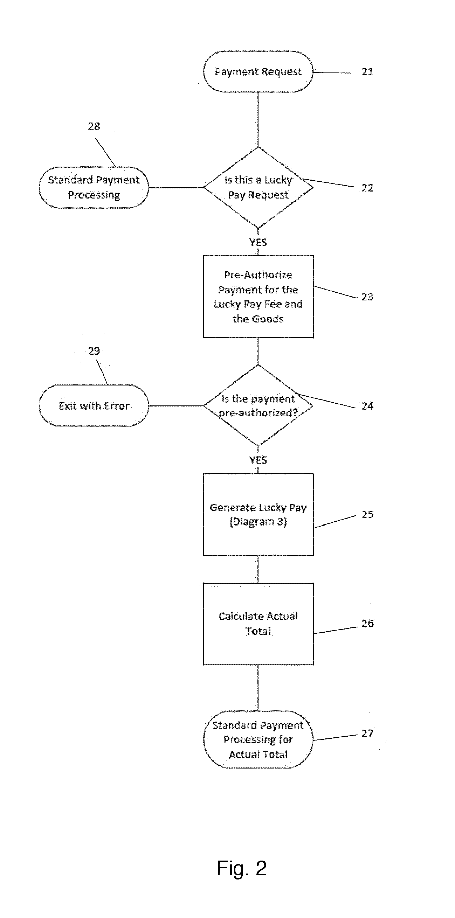

Turning now to Fig. 2, the processing of the payment method and system is shown. This Figure is an illustration of steps 12A, 12B, 12C and 12D of Fig. 1. A processor receives request for payment. In step 21, payment request is received. The processors checks if participation in the present system was requested in step 22. If no participation is requested, payment is processed in a standard way (step 28). If participation is requested, in step 23, the processor preauthorizes or requests preauthorization of the payment for participation/entry fee and the goods. In some embodiments, preauthorization might be for participation/entry fee, while in other embodiments payment for the fee might be required earlier or resolved differently. If the payment is not preauthorized, the processor rejects the payment in step 29. Next, in the step 25, a credit is generated. In the preferred embodiment, logging of information is done in a way that the generation process may be audited. Based on the credit total amount to be paid by customer is adjusted, as in step 26, and all payments are logged. Logging of payments may also be done in a previous step or in the following steps. Next, a standard payment processing is done.

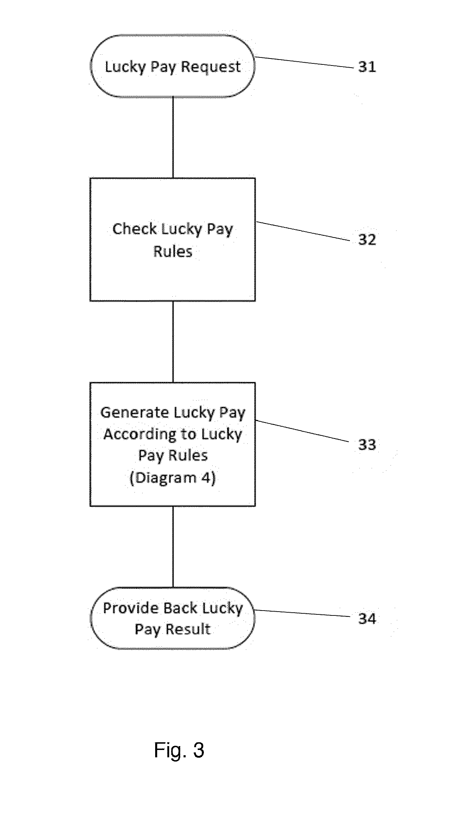

Fig. 3 shows the processing of payment system and method of the present invention. Fig. 3 is an illustration of the step 25 in Fig. 2. After receiving a request in step 21, the processor checks the system rules in step 32. It will determine the probabilities and purchase credit of the payment system. It will then generate results according to those rules (step 33). Once the results are generated, they will be provided back (step 34).

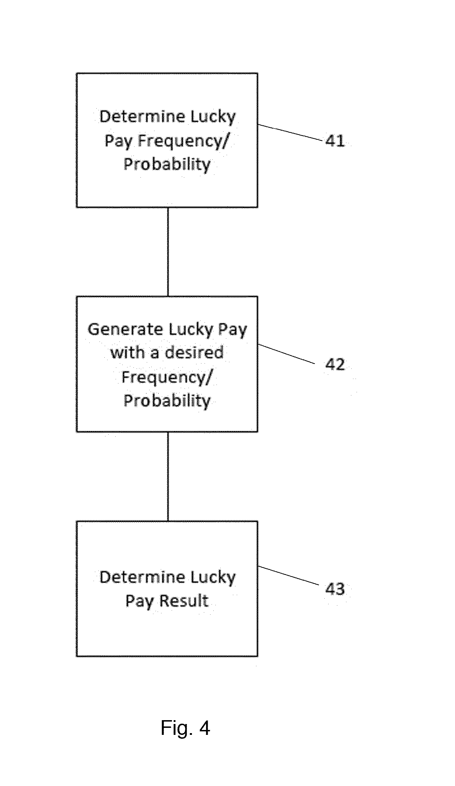

Fig. 4 shows the generation of results in accordance with the present invention. Fig. 4 is an illustration of the step 33 in diagram 3. In step 41, the processor determines the frequency. Based on participation/entry fee, the cost of goods and specific rules for the processor determines the payout. For example, in 77% times the payment system pays nothing, in 20% times the payment system pays its fee ($5) and 3% times it pays for goods and fee ($105). The processor will request generation of random numbers based on these percentages. In the next step 42, a random number will be generated with desired frequency and according to the defined rules, i.e. with or without replacement. Based on the outcome of generation, actual value of is determined in step 43. For example, it may be determined that payment system does not create any credit towards purchase, or it creates $5 credit or $105.

It should also be noted that it is possible that a gaming system can be employed to determine the chance for the system to pay for goods. This alternative embodiment may be an interesting variation for the user.

When using generation without replacement, the payment system provider minimizes any risk related to generation of random numbers. When generating without replacement possible outcomes are kept in a pool (table of possible outcomes), and outcomes are distributed randomly from this pool. Each time an outcome is generated, it is taken out of the pool. Once the pool falls below certain limit it is reseeded. In a preferred environment, multiple pools would be kept to support different amounts covered and different probability structures.

In a preferred embodiment, information leading to generation of results is logged. An auditable random number generator provides such information. In a preferred embodiment it should store payment system rules or rules identifier (information allowing to retrieve or verify actual rules used), cost of goods, the participation/entry fee and information allowing verification of random number. In a preferred environment, auditable RNG (random number generator) digitally signs or timestamps transactions, stores signatures and creates or stores identifier that could be used to identify the transaction of the present invention on auditable RNG and on any system using data from auditable RNG for audit. Other RNG solutions could be also used. For some embodiments, counters could be used to generate the system and method of the present invention with desired frequencies.

In a case where auditable RNG is not used for signing transactions and logging information, in the preferred environment, transaction content is digitally time-stamped or some other technique is used for enhancing security of logged info, e.g. calculating a 'running hash' of transaction content. Running hash is a method of storing a combined one way hash of transactions: for every new transaction a hash of previous transactions and the current transaction is calculated and stored with current transaction as a new running hash. Hashes create a chain allowing detection of any transaction modification. In some environments no such security enhancements will be used.

The process described above is an example; a different order of steps can be done, some of the steps might be omitted and other could be inserted. The description herein illustrates the concept and process of the present invention. It should be understood that it made be implemented and carried out in many different ways that are still within the scope of the present invention.

In practical deployments different participation/entry fees and odds could be used. In some embodiments, the fees could be calculated on the basis of the cost of goods and desired odds or alternatively odds maybe calculated based on the fee. For example, the 1) Lucky Pay fee is fixed, payout chance is determined and random number is generated to determine payout or 2) payout percentage is fixed and Lucky Pay fee is determined on the basis of fixed payout percentage and random number is generated based on the payout percentage. In both cases some additional rounding rules might be used to determine payout percentage or participation/entry fee.

In a preferred environment, the activities related to the present invention should be auditable. One should be able to verify that the correct amounts were credited to the rightful customers. The subject of this invention includes also an audit system for transactions in connection with carrying out the method and system of the present invention.

In a preferred environment, the audit system should be able to verify all transactions. The audit system should be able to verify batches of transactions and individual transactions. In a preferred environment, the audit of batches of transactions should be automated.

To verify transactions following parts are necessary: an element identifying the transaction and having the data necessary for audit. There are a few ways the transaction could be identified: by transaction identifier assigned to transaction, which is suitable for batch transaction verification and individual transaction verification. Other types of identification, unique for a customer and used by the customer while transacting could be used for single transaction verification: customer credit card number, customer's loyalty card, account identifier, email address, etc. could be used to identify transaction of the payment method and system of the present invention for the customer.

There are different embodiments that could be used for batch audit verification. In a preferred embodiment, the audit system reconciles all transactions, which are logged by auditable RNG and/or logged by a processor handling requests in accordance with the method and system of the present invention.

In the embodiments where an auditable random number generator is not used, other approaches to enhance the verification of information stored could be used, such as verifications of running hashes, digital signatures, etc.

It should be noted that the present invention relates to a method and system that is implemented in computer software code running on computer hardware that is interconnected to a device at the point of purchase.

The operations of computers are very well known in the art. File systems exist on a computer or across multiple computers, where each computer typically includes data storage, such as a hard disk or disk(s), random access memory (RAM) and an operating system for executing software code. Software code is typically executed to carry out the purpose of the computer. As part of the execution of the computer code, storage space on the hard disk or disks and RAM are commonly used. Also, data can be stored, either permanently or temporarily on the hard disk or disks and in RAM. The structure and operation of computers are so well known in the art that they need not be discussed in further detail herein.

In the field of computers and computing, file systems are also very well known in the art to enable the storage of such data as part of the use of the computer. A computer file system is a method for storing and organizing computer files and the data they contain to make it easy to find and access them. File systems may use data storage devices such as a hard disks or CD-ROMs and involve maintaining the physical location of the files, and they might provide access to data by the computer operating system or on a file server by acting as clients for a network protocol (e.g., NFS, SMB, or 9P clients). Also, they may be virtual and exist only as an access method for virtual data.

Further, it should be understood that the present invention may be carried out on a computer that uses any type of operating system. The present invention may be implemented in any type of software code using any language and can run on any type of computer hardware. This computer may employ any type of storage device, such as arrays of storage devices and any type of device, such as magnetic, solid state (such as flash) and optical media.

In the present invention, a point of purchase device is preferably used to interface with the above computer system that is carrying out the method and system of the present invention. Such a device may be connected to the method and system directly or via network, such as the Internet or local area network. The device may include a monitor and keyboard and may be integrated with the cash register or may be a separate device. Further details concerning such devices need not be further discussed herein as they are very well known in the art.

For example, a host computer may contain the client application for carrying out the present invention. The client application may reside on multiple host computers and still be within the scope of the present invention. The host computer is capable of storing the information in one or more data files such as flat file, database, and the like. These data files may reside on the host computer or some other physical device or devices.

It would be appreciated by those skilled in the art that various changes and modifications can be made to the illustrated embodiments without departing from the spirit of the present invention. All such modifications and changes are intended to be covered by the appended claims.

## Claims

1. A method for processing a request for the payment of goods to create a transaction, comprising the steps of:
determining a payment amount to paid by a customer for goods;
receiving a participation fee, which is less than the payment amount, and request from a customer in addition to the payment amount;
processing the request, based on a probability related to chance;
generating a chance result; and
determining how much the payment amount is reduced based on the chance result.

2. The method of claim 1, further comprising the step of:
logging activity related to determination of the reduced prizes;
wherein an internal or external random number generator is used for determining how much the payment amount is reduced and wherein logging information related to generation of random numbers allow audit of random numbers and verification against actual reduction of payments.

3. The method of claim 2, wherein the step of generating a chance result is carried out using generation with or without replacement.

4. The method of claim 1, wherein counters are used for determining how much the payment amount in reduced.

5. The method of claim 1, further comprising the step of:
accepting the payment for buying a chance to pay less for the goods, whereas the customer may buy this chance in the physical store, on the Internet or on a mobile device.

6. The method of claim 1, wherein the step of determining how much the payment amount is reduced based on the chance result is based on the participation fee and the cost of the goods.

7. The method of claim 1, wherein the step of determining how much the payment amount is reduced based on the cost of the goods and desired odds to pay only a fraction of the cost of goods or to pay nothing for goods.

8. The method of claim 1, wherein the amount credited is selected from one of the following: nothing, the participation fee, a portion of the cost of goods, the entire cost of goods; and cost of goods plus the cost of the participation fee.

9. The method of claim 1, wherein determination of the choice by a customer for a chance to pay less or nothing for the cost of goods depends on choosing different odds.

10. The method of claim 1, further comprising the step of:
verifying the transaction by use of an identifier where the identifier is selected from the group consisting of a regular transaction identifier, a customer credit card, a debit number, a customer's loyalty card, an account identifier and email address.

11. The method of claim 1, further comprising the step of:
providing an audit system to verify the transaction;
using the audit system, verifying the correctness of generated credit for processing a request for payment of goods, where a customer can buy a chance to pay only a fraction of the cost of goods or to pay nothing for goods;
processing the request based on a probability;
related to this chance, determining how much the customer's price for the goods can be reduced;
wherein the audit system determines correctness of calculation of the reduction of cost of goods and wherein the audit system determines the integrity of the transaction.

12. The method of claim 1, determining how much the payment amount is reduced based on one selected from the group consisting of a transaction identifier, loyalty card, and credit card id.

13. The method of claim 1, wherein a gaming system is used to determine how much the payment amount for the goods is reduced.

14. The method of claim 1, wherein the method is carried out in a system that is a part of store system, chain of stores, payment processor, independent system or any combination of the above.

15. A system for processing a request for the payment of goods to create a transaction, comprising at least one processor executing method steps according to one of the claims 1 to 13.
